# EUROPEAN PATENT SPECIFICATION

(11) **EP 4 423 192 B1**
(45) Date of publication and mention of the grant of the patent: **02.12.2026**
(21) Application number: 22797487.0
(22) Date of filing: 04.10.2022
(51) Int. Cl.: C08L 71/12, C08L 83/12

(54) **THERMOPLASTIC COMPOSITION, METHOD OF MAKING THE THERMOPLASTIC COMPOSITION, AND ARTICLES COMPRISING THE THERMOPLASTIC COMPOSITION**
THERMOPLASTISCHE ZUSAMMENSETZUNG, VERFAHREN ZUR HERSTELLUNG DER THERMOPLASTISCHEN ZUSAMMENSETZUNG UND GEGENSTÄNDE AUS DER THERMOPLASTISCHEN ZUSAMMENSETZUNG
COMPOSITION THERMOPLASTIQUE, PROCÉDÉ DE FABRICATION DE LA COMPOSITION THERMOPLASTIQUE ET ARTICLES COMPRENANT LA COMPOSITION THERMOPLASTIQUE

(30) Priority: 28.10.2021 EP 21205340
(43) Date of publication of application: 04.09.2024
(73) Proprietor: SHPP Global Technologies B.V., 4612 PX Bergen op Zoom (NL)
(72) Inventor: CHEN, Haiming, Shanghai (CN); ZHENG, Liping, Shanghai (CN)
(74) Representative: Balder IP Law, S.L.
(86) International application number: PCT/IB2022/059440
(87) International publication number: WO 2023/073458

(56) References cited:
- WO-A1-2016/187791
- WO-A1-2021/186252
- WO-A2-2010/068362

## Description

### CROSS- REFERENCE TO RELATED APPLICATION

This application claims priority to and the benefit of European Patent Application No. 21205340.9, filed on October 28, 2021.

### BACKGROUND

Poly(arylene ether)s are commercially attractive materials because of their unique combination of properties, including, for example, high temperature resistance, dimensional and hydrolytic stability, and electrical properties. Compositions comprising poly(arylene ether)s have been disclosed in WO 2010/068362 A2 and WO 2021/186252 A1.

There is a continuing need in the art for a poly(arylene ether) composition having a low flammability, particularly for thin wall application. It would be further advantageous if, in addition to low flammability, the composition also exhibited high heat resistance, high impact strength, and hydrolytic resistance.

### SUMMARY

A thermoplastic composition comprises 5 to 40 weight percent of a poly(phenylene ether)-poly(siloxane) block copolymer reaction product comprising a poly(phenylene ether)-poly(siloxane) block copolymer and a first poly(phenylene ether); 1 to 15 weight percent of an impact modifier comprising a hydrogenated block copolymer of an alkenyl aromatic and a conjugated diene; 5 to 20 weight percent of an organophosphate ester flame retardant; less than 1 weight percent of a reinforcing filler; less than 0.5 weight percent of tricalcium phosphate; and 40 to 90 weight percent of a second poly(phenylene ether); wherein weight percent of each component is based on the total weight of the composition; and wherein the poly(phenylene ether)-poly(siloxane) block copolymer reaction product and the second poly(phenylene ether) are present in a total amount of at least 70 weight percent.

A method of making the composition comprises melt-mixing the components of the composition.

An article comprises the composition. For example, an electric vehicle battery component can be extruded from the composition, preferably wherein the electric vehicle battery component is an electric vehicle battery insulation sheet or film.

The above described and other features are exemplified by the following detailed description.

### DETAILED DESCRIPTION

The present inventors have unexpectedly discovered that a particular thermoplastic composition can provide a desirable combination of properties. More specifically, a composition which includes particular amounts of a poly(phenylene ether)-polysiloxane block copolymer reaction product, a second poly(phenylene ether), a hydrogenated block copolymer of an alkenyl aromatic and a conjugated diene, and an organophosphate ester flame retardant, can provide a desirable combination of low flammability, high heat resistance, high impact strength, and hydrolytic resistance.

Accordingly, an aspect of the present disclosure is a thermoplastic composition. The thermoplastic composition comprises a poly(phenylene ether)-polysiloxane block copolymer reaction product comprising a first poly(phenylene ether) and a poly(phenylene ether)-poly(siloxane) block copolymer. As used herein, the term "poly(phenylene ether)-polysiloxane block copolymer" refers to a block copolymer comprising at least one poly(phenylene ether) block and at least one polysiloxane block.

The poly(phenylene ether) block of the poly(phenylene ether)-poly(siloxane) block copolymer comprises repeating structural units according to formula (1) 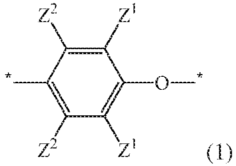 wherein each occurrence of Z¹ is independently halogen, unsubstituted or substituted C₁₋₁₂ hydrocarbyl provided that the hydrocarbyl group is not tertiary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; and each occurrence of Z² is independently hydrogen, halogen, unsubstituted or substituted C₁-₁₂ hydrocarbyl provided that the hydrocarbyl group is not tertiary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

In an aspect, the poly(phenylene ether) block comprises 2,6-dimethyl-1,4-phenylene ether repeating units, that is, repeating units according to formula (2) 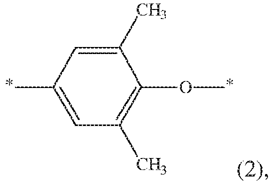 2,3,6-trimethyl-1,4-phenylene ether repeating units, or a combination thereof.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

The polysiloxane block is a residue of the hydroxyaryl-terminated polysiloxane. In an aspect, the polysiloxane block comprises repeating units according to formula (3) 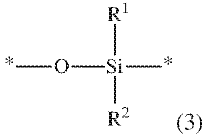
wherein each occurrence of R¹ and R² is independently hydrogen, C₁-₁₂ hydrocarbyl or C₁-₁₂ halohydrocarbyl; and the polysiloxane block further comprises a terminal unit of formula (4) 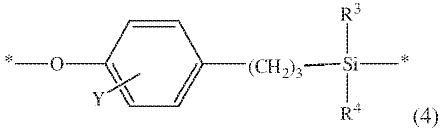
wherein Y is hydrogen, C₁-₁₂ hydrocarbyl, C₁-₁₂ hydrocarbyloxy, or halogen, and wherein each occurrence of R³ and R⁴ is independently hydrogen, C₁-₁₂ hydrocarbyl or C₁-₁₂ halohydrocarbyl. In an aspect, the polysiloxane repeating units comprise dimethylsiloxane (-Si(CH₃)₂O-) units. In an aspect, the polysiloxane block has a structure according to formula (5) 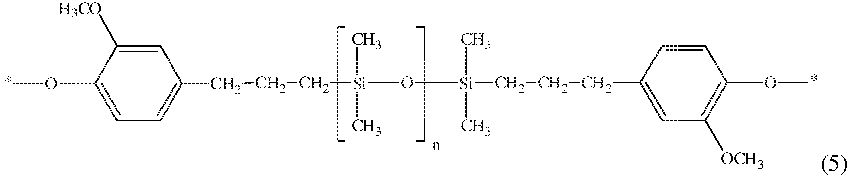
wherein n is, on average, 20 to 60.

The hydroxyaryl-terminated polysiloxane comprises at least one hydroxyaryl terminal group. In an aspect, the hydroxyaryl-terminated polysiloxane has a single hydroxyaryl terminal group, in which case a poly(phenylene ether)-polysiloxane diblock copolymer is formed. In an aspect, the hydroxyaryl-terminated polysiloxane has two hydroxyaryl terminal groups, in which case in which case poly(phenylene ether)-polysiloxane diblock copolymer and/or poly(phenylene ether)-polysiloxane-poly(phenylene ether) triblock copolymer are formed. It is also possible for the hydroxyaryl-terminated polysiloxane to have a branched structure that allows three or more hydroxyaryl terminal groups and the formation of corresponding branched block copolymers.

In an aspect, the hydroxyaryl-terminated polysiloxane comprises, on average, 20 to 80 siloxane repeating units, specifically 25 to 70 siloxane repeating units, more specifically 30 to 60 siloxane repeating units, still more specifically 35 to 50 siloxane repeating units, yet more specifically 40 to 50 siloxane repeating units. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxyaryl-terminated polysiloxane molecule can be determined by nuclear magnetic resonance (NMR) methods that compare the intensities of signals associated with the siloxane repeating units to those associated with the hydroxyaryl terminal groups. For example, when the hydroxyaryl-terminated polysiloxane is a eugenol-capped polydimethylsiloxane, it is possible to determine the average number of siloxane repeating units by a proton nuclear magnetic resonance (¹H NMR) method in which integrals for the protons of the dimethylsiloxane resonance and the protons of the eugenol methoxy group are compared.

In an aspect, the poly(phenylene ether)-polysiloxane block copolymer reaction product has a weight average molecular weight of at least 30,000 grams per mole (g/mol). For example, the reaction product can have a weight average molecular weight of 30,000 to 150,000 g/mol, specifically 35,000 to 120,000 g/mol, more specifically 40,000 to 90,000 g/mol, even more specifically 45,000 to 70,000 g/mol. In an aspect, the poly(phenylene ether)-polysiloxane block copolymer reaction product has a number average molecular weight of 10,000 to 50,000 g/mol, specifically 10,000 to 30,000 g/mol, more specifically 14,000 to 24,000 g/mol.

In an aspect, the poly(phenylene ether)-polysiloxane block copolymer reaction product has an intrinsic viscosity of at least 0.3 deciliter per gram, as measured by Ubbelohde viscometer at 25°C in chloroform. In an aspect, the intrinsic viscosity is 0.3 to 0.5 deciliter per gram, specifically 0.31 to 0.5 deciliter per gram, more specifically 0.35 to 0.47 deciliter per gram.

The poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In an aspect, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane and monohydric phenol can be as described above.

The oxidative copolymerization method produces the poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al.

The poly(phenylene ether)-polysiloxane block copolymer reaction product can comprise 1 to 30 weight percent siloxane repeating units and 70 to about 99 weight percent phenylene ether repeating units, based on the total weight of the reaction product. It will be understood that the siloxane repeating units are derived from the hydroxyaryl-terminated polysiloxane, and the phenylene ether repeating units are derived from the monohydric phenol. In an aspect, such as, for example, when the poly(phenylene ether)-polysiloxane block copolymer reaction product is purified via precipitation in isopropanol, the siloxane repeating units consist essentially of the residue of hydroxyaryl-terminated polysiloxane that has been incorporated into the poly(phenylene ether)-polysiloxane block copolymer

In an aspect, the poly(phenylene ether)-polysiloxane block copolymer comprises phenylene ether repeating units derived from 2,6-dimethylphenol, 2,3,6-trimethylphenol, and combinations thereof. In an aspect, the poly(phenylene ether)-polysiloxane block copolymer can, for example, contribute 0.05 to 2 weight percent, specifically 0.1 to 1 weight percent, more specifically 0.2 to 0.8 weight percent, of siloxane groups to the composition as a whole.

The composition comprises the poly(phenylene ether)-polysiloxane block copolymer reaction product in an amount of 5 to 40 weight percent, based on the total weight of the composition. Within this range, the poly(phenylene ether)-polysiloxane block copolymer reaction product can be present in an amount of at least 8 weight percent, or at least 10 weight percent, or at least 12 weight percent, or at least 15 weight percent, or at least 20 weight percent, or at least 22 weight percent, or at least 24 weight percent. Also within this range, the poly(phenylene ether)-polysiloxane block copolymer reaction product can be present in an amount of less than or equal to 35 weight percent, or less than or equal to 32 weight percent, or less than or equal to 30 weight percent, or less than or equal to 28 weight percent. In an aspect, the poly(phenylene ether)-polysiloxane block copolymer reaction product can be present in an amount of 8 to 40 weight percent, or 8 to 35 weight percent, or 8 to 30 weight percent, or 8 to 28 weight percent, or 10 to 28 weight percent.

In addition to the poly(phenylene ether)-polysiloxane block copolymer reaction product, the thermoplastic composition further comprises a second poly(phenylene ether).

The second poly(phenylene ether) can have an intrinsic viscosity of greater than 0.25 deciliters per gram, preferably 0.44 to 0.60 deciliters per gram, more preferably 0.44 to 0.50 deciliters per gram, measured at 25°C in chloroform using an Ubbelohde viscometer. In an aspect, the second poly(phenylene ether) comprises a homopolymer or copolymer of the monomers 2,6-dimethylphenol, 2,3,6-trimethylphenol, and combinations thereof.

In an aspect, the second poly(phenylene ether) can have an intrinsic viscosity of greater than 0.43 deciliters per gram, preferably wherein the second poly(phenylene ether) comprises poly(2,6-dimethyl-1,4-phenylene ether).

The composition can comprise the second poly(phenylene ether) in an amount of 40 to 89 weight percent, based on the total weight of the composition. Within this range, the second poly(phenylene ether) amount can be 45 to 89 weight percent, or 45 to 75 weight percent, or 50 to 75 weight percent, or 50 to 70 weight percent, or 50 to 60 weight percent.

In an aspect, the composition can comprise the poly(phenylene ether)-poly(siloxane) block copolymer reaction product and the second poly(phenylene ether) are present in a total amount of at least 70 weight percent, or 70 to 94 weight percent, or 75 to 85 weight percent, based on the total weight of the composition.

The composition further comprises a hydrogenated block copolymer of an alkenyl aromatic and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In an aspect, the hydrogenated block copolymer is a low poly(alkenyl aromatic content) hydrogenated block copolymer in which the poly(alkenyl aromatic) content is 10 to less than 40 weight percent, or 20 to 35 weight percent, or 25 to 35 weight percent, or 30 to 35 weight percent, all based on the weight of the low poly(alkenyl aromatic) content hydrogenated block copolymer. In an aspect, the hydrogenated block copolymer is a high poly(alkenyl aromatic content) hydrogenated block copolymer in which the poly(alkenyl aromatic) content is 40 to 90 weight percent, or 50 to 80 weight percent, or 60 to 70 weight percent, all based on the weight of the high poly(alkenyl aromatic content) hydrogenated block copolymer.

In an aspect, the hydrogenated block copolymer has a weight average molecular weight of 40,000 to 400,000 g/mol. The number average molecular weight and the weight average molecular weight can be determined by gel permeation chromatography and based on comparison to polystyrene standards. In an aspect, the hydrogenated block copolymer has a weight average molecular weight of 200,000 to 400,000 g/mol, or 220,000 to 350,000 g/mol. In an aspect, the hydrogenated block copolymer has a weight average molecular weight of 40,000 to 200,000 g/mol, or 40,000 to 180,000 g/mol, or 40,000 to 150,000 g/mol.

The alkenyl aromatic monomer used to prepare the hydrogenated block copolymer can have the structure according to formula (6) 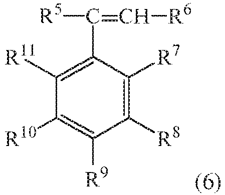 wherein R⁵ and R⁶ each independently represent a hydrogen atom, a C₁₋₈ alkyl group, or a C₂₋₈ alkenyl group; R⁷ and R¹¹ each independently represent a hydrogen atom, a C₁₋₈ alkyl group, a chlorine atom, or a bromine atom; and R⁸, R⁹, and R¹⁰ each independently represent a hydrogen atom, a C₁₋₈ alkyl group, or a C₂₋₈ alkenyl group, or R⁸ and R¹⁰ are taken together with the central aromatic ring to form a naphthyl group, or R⁹ and R¹⁰ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In an aspect, the alkenyl aromatic monomer is styrene.

The conjugated diene used to prepare the hydrogenated block copolymer can be a C₄₋₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In an aspect, the conjugated diene is 1,3-butadiene, 2-methyl-1,3-butadiene, or a combination thereof. In an aspect, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In an aspect, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In an aspect, the hydrogenated block copolymer has a tapered linear structure. In an aspect, the hydrogenated block copolymer has a non-tapered linear structure. In an aspect, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In an aspect, the hydrogenated block copolymer is a diblock copolymer, a triblock copolymer, or a combination thereof.

In an aspect, the hydrogenated block copolymer excludes the residue of monomers other than the alkenyl aromatic compound and the conjugated diene. In an aspect, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In an aspect, the hydrogenated block copolymer includes the residue of one or more acid functionalizing agents, such as maleic anhydride. In an aspect, the hydrogenated block copolymer comprises a polystyrene-poly(ethylene-butylene)-polystyrene triblock copolymer.

In an aspect, the hydrogenated block copolymer is a polystyrene-poly(ethylenebutylene)-polystyrene triblock copolymer having a polystyrene content of 10 to 50 weight percent, or 20 to 40 weight percent, or 20 to 35 weight percent, or 25 to 35 weight percent, based on the weight of the polystyrene-poly(ethylene-butylene)-polystyrene triblock copolymer. In these aspects, the polystyrene-poly(ethylene-butylene)-polystyrene triblock copolymer can, optionally, have a weight average molecular weight of 200,000 to 400,000 grams per mole, or 250,000 to 350,000 grams per mole, determined by size exclusion chromatography using polystyrene standards.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON^{™} G1701 (having 37 weight percent polystyrene) and G1702 (having 28 weight percent polystyrene); the polystyrene-poly(ethylene-butylene)-polystyrene triblock copolymers available from Kraton Performance Polymers Inc.as KRATON^{™} G1641 (having 33 weight percent polystyrene), G1650 (having 30 weight percent polystyrene), G1651 (having 33 weight percent polystyrene), and G1654 (having 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available hydrogenated block copolymers include polystyrene-poly(ethylene-butylene)-polystyrene (SEBS) triblock copolymers available from Dynasol as CALPRENE^{™} H6140 (having 31 weight percent polystyrene), H6170 (having 33 weight percent polystyrene), H6171 (having 33 weight percent polystyrene), and H6174 (having 33 weight percent polystyrene); and from Kuraray as SEPTON^{™} 8006 (having 33 weight percent polystyrene) and 8007 (having 30 weight percent polystyrene); polystyrene-poly(ethylene-propylene)-polystyrene (SEPS) copolymers available from Kuraray as SEPTON^{™} 2006 (having 35 weight percent polystyrene) and 2007 (having 30 weight percent polystyrene); and oil-extended compounds of these hydrogenated block copolymers available from Kraton Performance Polymers Inc.as KRATON^{™} G4609 (containing 45% mineral oil, and the SEBS having 33 weight percent polystyrene) and G4610 (containing 31% mineral oil, and the SEBS having 33 weight percent polystyrene); and from Asahi as TUFTEC^{™} H1272) (containing 36% oil, and the SEBS having 35 weight percent polystyrene). Mixtures of two of more hydrogenated block copolymers can be used. In an aspect, the hydrogenated block copolymer comprises a polystyrene poly(ethylene-butylene)-polystyrene triblock copolymer having a weight average molecular weight of at least 100,000 grams per mole, or 200,000 to 400,000 grams per mole.

The composition comprises the hydrogenated block copolymer in an amount of 1 to 15 weight percent based on the total weight of the composition. Within this range, the hydrogenated block copolymer amount can be 1 to 10 weight percent, or 3 to 8 weight percent, or 5 to 10 weight percent, or 4 to 8 weight percent, or 5 to 7 weight percent.

In an aspect, the composition can optionally further comprise a homopolystyrene or a high impact polystyrene. As used herein, the term homopolystyrene refers to a homopolymer of styrene. Thus, the residue of any monomer other than styrene is excluded from the homopolystyrene. The homopolystyrene can be atactic, syndiotactic, or isotactic. In an aspect, the homopolystyrene can be atactic homopolystyrene. In an aspect, the homopolystyrene can have a melt volume flow rate of 1.5 to 5 cubic centimeters per 10 minutes, measured at 200 °C and 5-kilogram load according to ISO 1133. High impact polystyrene, also known as HIPS or rubber-modified polystyrene, can comprise 80 to 96 weight percent polystyrene, specifically 88 to 94 weight percent polystyrene; and 4 to 20 weight percent polybutadiene, specifically 6 to 12 weight percent polybutadiene, based on the weight of the rubber-modified polystyrene. In an aspect, the rubber-modified polystyrene has an effective gel content of 10 to 35 percent.

When present, the homopolystyrene or the high impact polystyrene can be present in an amount of greater than 0 to 15 weight percent, or 1 to 10 weight percent, based on the total weight of the composition. In an aspect, a homopolystyrene or a high impact polystyrene can be excluded from the composition.

The composition further comprises an organophosphate ester flame retardant. Exemplary organophosphate ester compounds include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In an aspect, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof.

In an aspect the organophosphate ester comprises a bis-aryl phosphate according to formula (7) 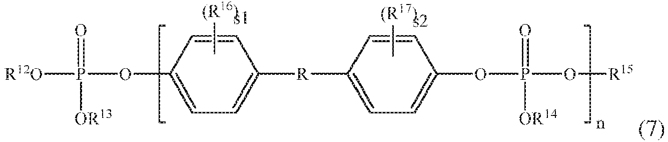 wherein R is independently at each occurrence a C₁-₁₂ alkylene group; R¹⁶ and R¹⁷ are independently at each occurrence a C₁-₅ alkyl group; R¹², R¹³, and R¹⁵ are independently a C₁-₁₂ hydrocarbyl group; R¹⁴ is independently at each occurrence a C₁-₁₂ hydrocarbyl group; n is 1 to 25; and s1 and s2 are independently an integer equal to 0, 1, or 2. In an aspect OR¹², OR¹³, OR¹⁴ and OR¹⁵ are independently derived from phenol, a monoalkylphenol, a dialkylphenol, or a trialkylphenol.

As readily appreciated by one of ordinary skill in the art, the bis-aryl phosphate is derived from a bisphenol. Exemplary bisphenols include 2,2-bis(4-hydroxyphenyl)propane (bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In an aspect, the bisphenol comprises bisphenol A.

In an aspect, the organophosphate ester comprises resorcinol bis-diphenyl phosphate, bis-phenol A bis-diphenyl phosphate, or a combination thereof.

The organophosphate ester can be present in the composition in an amount of 5 to 20 weight percent based on the total weight of the composition. Within this range, the organophosphate ester can be present in an amount of 7 to 15 weight percent, or 8 to 14 weight percent, or 8.5 to 12.5 weight percent.

The thermoplastic composition can optionally further comprise an additive composition. The additive composition comprises one or more additives. The additives can be, for example, stabilizers, mold release agents, lubricants, processing aids, drip retardants, nucleating agents, UV blockers, dyes, pigments, antioxidants, anti-static agents, blowing agents, mineral oil, metal deactivators, antiblocking agents, or a combination thereof. In an aspect, the additive composition can comprise an antioxidant, a lubricant, a thermal stabilizer, an ultraviolet light absorbing additive, a plasticizer, an anti-dripping agent, a mold release agent, an antistatic agent, a dye, a pigment, a laser marking additive, a radiation stabilizer, or a combination thereof. When present, such additives are typically used in a total amount of 0.1 to 10 weight percent, based on the total weight of the composition.

In an aspect, the composition can comprise an anti-drip agent. Fluorinated polyolefin or polytetrafluoroethylene can be used as an anti-drip agent. Anti-drip agents can also be used, for example a fibril forming or non-fibril forming fluoropolymer such as polytetrafluoroethylene (PTFE). The anti-drip agent can be encapsulated by a rigid copolymer such as, for example styrene acrylonitrile (SAN). PTFE encapsulated in SAN is known as TSAN. Encapsulated fluoropolymers can be made by polymerizing the encapsulating polymer in the presence of the fluoropolymer, for example, in an aqueous dispersion. TSAN can provide significant advantages over PTFE, in that TSAN can be more readily dispersed in the composition. A suitable TSAN can comprise, for example, 50 wt % PTFE and 50 wt % SAN, based on the total weight of the encapsulated fluoropolymer. The SAN can comprise, for example, 75 wt % styrene and 25 wt % acrylonitrile based on the total weight of the copolymer. Alternatively, the fluoropolymer can be pre-blended in some manner with a second polymer, such as for, example, an aromatic polycarbonate resin or SAN to form an agglomerated material for use as an anti-drip agent. Either method can be used to produce an encapsulated fluoropolymer.

The anti-drip agent can be added in the form of relatively large particles having a number average particle size of 0.3 to 0.7 mm, specifically 0.4 to 0.6 millimeters. The anti-drip agent can be used in amounts of 0.01 wt% to 5.0 wt%, based on the total weight of the composition.

The composition can include less than 1 weight percent, or less than 0.5 weight percent of a reinforcing filler. In an aspect, reinforcing fillers can be excluded from the composition. In an aspect, a reinforcing filler can be excluded from the composition. Reinforcing fillers can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well a combination thereof. The fillers and reinforcing agents can be coated with a layer of metallic material to facilitate conductivity, or surface treated with silanes to improve adhesion and dispersion with the polymer matrix. In an aspect, the composition can include less than 5 weight percent of glass fibers. In an aspect, the composition can exclude glass fibers.

The composition can include less than 0.5 weight percent, or less than 0.1 weight percent, or less than 0.01 weight percent tricalcium phosphate. In an aspect, the composition can exclude tricalcium phosphate. Tricalcium phosphate (CAS Reg. No. 1306-06-5) has the chemical formula Ca₅(OH)(PO₄)₃ and is also known as hydroxyapatite, hydroxylapatite, tribasic calcium phosphate, pentacalcium hydroxy orthophosphate, and apatite.

The composition can optionally minimize or exclude additional components not specifically described herein. For example, the composition can comprise less than 2 weight percent, or less than 1 weight percent, or less than 0.5 weight percent, or less than 0.1 weight percent of any thermoplastic polymer other than the poly(phenylene ether)-poly(siloxane) block copolymer reaction product, the second poly(phenylene ether), the hydrogenated block copolymer, the polystyrene and the high-impact polystyrene. In an aspect, the composition can exclude any thermoplastic polymer other than the foregoing polymers of the present composition. In an aspect, the composition can minimize or exclude glass fibers. In an aspect, the composition can minimize or exclude homopolystyrene or rubber-modified polystyrene.

In an aspect, the composition can comprise 8 to 28 weight percent of the poly(phenylene ether)-polysiloxane block copolymer reaction product; 50 to 75 weight percent of the second poly(phenylene ether); 3 to 10 weight percent of the hydrogenated block copolymer; and 7 to 15 weight percent of the organophosphate ester flame retardant. The composition can exclude tricalcium phosphate and reinforcing fillers.

In an aspect, the composition can comprise the poly(phenylene ether)-polysiloxane block copolymer reaction product comprising a phenylene ether block comprising repeating units derived from 2,6-dimethyl phenol and a siloxane block comprising repeating units derived from dimethyl siloxane; the hydrogenated block copolymer of an alkenyl aromatic and a conjugated diene; the organophosphate ester flame retardant comprising resorcinol bis-diphenyl phosphate, bis-phenol A bis-diphenylphosphate, or a combination thereof, and the second poly(phenylene ether) comprising repeating units derived from 2,6-dimethyl phenol. In an aspect, the composition can comprise 8 to 28 weight percent of the poly(phenylene ether)-polysiloxane block copolymer reaction product; 50 to 75 weight percent of the second poly(phenylene ether); 3 to 10 weight percent of the hydrogenated block copolymer; and 7 to 15 weight percent of the organophosphate ester flame retardant comprising resorcinol bis-diphenyl phosphate, bis-phenol A bis-diphenyl phosphate, or a combination thereof.

The composition of the present disclosure can comprise 5 to 40 weight percent of a poly(phenylene ether)-poly(siloxane) block copolymer reaction product comprising a poly(phenylene ether)-poly(siloxane) block copolymer and a first poly(phenylene ether); 1 to 15 weight percent of an impact modifier comprising a hydrogenated block copolymer of an alkenyl aromatic and a conjugated diene; 5 to 20 weight percent of an organophosphate ester flame retardant; less than 3 weight percent of a reinforcing filler; less than 0.5 weight percent of tricalcium phosphate; and 40 to 89 weight percent, preferably 45 to 85 weight percent of a second poly(phenylene ether); wherein weight percent of each component is based on the total weight of the composition. The poly(phenylene ether)-poly(siloxane) block copolymer reaction product and the second poly(phenylene ether) are present in a total amount of at least 70 weight percent, or 70 to 94 weight percent, or 75 to 85 weight percent, based on the total weight of the composition. The first poly(phenylene ether) can have an intrinsic viscosity of greater than 0.25 deciliters per gram, or 0.4 to 0.6 deciliters per gram, measured at 25°C in chloroform using an Ubbelohde viscometer; preferably wherein the poly(phenylene ether) comprises poly(2,6-dimethyl-1,4-phenylene ether). The organophosphate ester flame retardant can comprise resorcinol bis-diphenyl phosphate, bis-phenol A bis-diphenyl phosphate, resorcinol bis(di 2,6-dimethylphenyl) phosphate, oligomeric phosphate ester, triphenyl phosphate, or a combination thereof, preferably bis-phenol A bis-diphenyl phosphate. The hydrogenated block copolymer can comprise polystyrene-poly(ethylene-butylene)-polystyrene. The composition can comprise 0 to 15 weight percent of a homopolystyrene or a high impact polystyrene. The composition can further comprise 0.1 to 10 weight percent of an additive composition. The composition can exclude glass fibers. The composition can comprise 8 to 28 weight percent of the poly(phenylene ether)-polysiloxane block copolymer reaction product; 50 to 75 weight percent of the second poly(phenylene ether); 3 to 10 weight percent of the hydrogenated block copolymer; and 7 to 15 weight percent of the organophosphate ester flame retardant. The relative amount of each component can be adjusted within the ranges described above to provide the desired combination of properties. As is understood by one of skill in the art, the amount of each component is selected such that they total 100 weight percent.

The composition of the present disclosure can exhibit a desirable combination of physical properties. For example, a molded sample of the composition can exhibit a UL-94 flammability rating of V0, measured using 1.0-millimeter test bars after conditioning at 23°C for 48 hours and at 70°C for 168 hours; a UL-94 flammability rating of V0, measured using 0.75-millimeter test bars after conditioning at 23°C for 48 hours and at 70°C for 168 hours; a UL-94 flammability rating of V0, measured using 0.5-millimeter test bars after conditioning at 23°C for 48 hours and at 70°C for 168 hours; a UL-94 flammability rating of V0, measured using 0.3-millimeter test bars after conditioning at 23°C for 48 hours and at 70°C for 168 hours; and a UL-94 flammability rating of V0, measured using 0.2-millimeter test bars after conditioning at 23°C for 48 hours and at 70°C for 168 hours. A molded sample of the composition can exhibit a heat deflection temperature of greater than or equal to 115°C, measured on 3.2mm thick bars using a load of 1.82 MPa according ASTM D648. A molded sample of the composition can exhibit a notched Izod impact strength of greater than or equal to 240 J/m, measured according to ASTM D256.

The composition of the present disclosure can be manufactured, for example, by melt blending the components of the composition. The components of the composition can be mixed or blended using common equipment such as ribbon blenders, HENSCHEL^{™} mixers, BANBURY^{™} mixers, drum tumblers, and the like, and the blended composition can subsequently be melt-blended or melt-kneaded. The melt-blending or melt-kneading can be performed using common equipment such as single-screw extruders, twin-screw extruders, multi-screw extruders, co-kneaders, and the like. For example, the present composition can be prepared by melt-blending the components in a twin-screw extruder at a temperature of 270 to 310°C, or 280 to 300°C. The extrudate can be immediately quenched in a water bath and pelletized. The pellets so prepared can be one-fourth inch long or less as desired (1 inch = 2.54 cm). Such pellets can be used for subsequent molding, shaping, or forming.

Shaped, formed, or molded articles comprising the composition represent another aspect of the present disclosure. The composition can be molded into useful shaped articles by a variety of methods, such as injection molding, extrusion, rotational molding, blow molding and thermoforming. Some examples of articles include an electric vehicle battery module, battery housing, battery case, battery cell frame, battery cell spacers, battery cell retainers, battery pack insulation film, bus bar holders, terminal covers, an electrical or electronic component, a thermoset circuit breaker, a fuser holder for an electrographic copier, a photovoltaic junction box, photovoltaic connector, an electrical connector, an automotive electrical connector, an electrical relay, a charge coupler, an appliance component, an automotive component, a portable device, a mobile component, or a stationary electrical component. In an aspect, the article is an extruded article, a molded article, pultruded article, a thermoformed article, a foamed article, a layer of a multi-layer article, a substrate for a coated article, or a substrate for a metallized article. In an aspect, the composition can be particularly useful in molded or extruded components for electric vehicle battery components. For example, the composition can be used in an extruded component for an electric vehicle battery component, such as an insultation sheet or film for an electric vehicle battery component.

A battery insulation film or sheet represents another aspect of the present disclosure. The battery insulation film or sheet is extruded from a composition comprising 5 to 40 weight percent of a poly(phenylene ether)-poly(siloxane) block copolymer reaction product comprising a poly(phenylene ether)-poly(siloxane) block copolymer and a first poly(phenylene ether); 1 to 15 weight percent of an impact modifier comprising a hydrogenated block copolymer of an alkenyl aromatic and a conjugated diene; 5 to 20 weight percent of an organophosphate ester flame retardant; less than 3 weight percent of a reinforcing filler; less than 0.5 weight percent of tricalcium phosphate; and 40 to 89 weight percent of a second poly(phenylene ether); wherein weight percent of each component is based on the total weight of the composition. In an aspect, the extruded film or sheet can have a UL-94 flammability rating of V0, measured using 1.0-millimeter test bars after conditioning at 23°C for 48 hours and at '70°C for 168 hours; a UL-94 flammability rating of V0, measured using 0.75-millimeter test bars after conditioning at 23°C for 48 hours and at 70°C for 168 hours; a UL-94 flammability rating of V0, measured using 0.5-millimeter test bars after conditioning at 23°C for 48 hours and at 70°C for 168 hours; a UL-94 flammability rating of V0, measured using 0.3-millimeter test bars after conditioning at 23°C for 48 hours and at 70°C for 168 hours; and a UL-94 flammability rating of V0, measured using 0.2-millimeter test bars after conditioning at 23°C for 48 hours and at 70°C for 168 hours. The extruded film or sheet can exhibit a heat deflection temperature of greater than or equal to 115°C, measured on 3.2mm thick bars using a load of 1.82 MPa according ASTM D648; and a notched Izod impact strength of greater than or equal to 240 J/m, measured according to ASTM D256. The battery insulation film can have a thickness of, for example, 50 to 1000 micrometers.

As described herein, the present inventor has unexpectedly discovered that a composition including specific amounts of a poly(phenylene ether)-polysiloxane block copolymer, a hydrogenated block copolymer of an alkenyl aromatic and a conjugated diene, an organophosphate ester flame retardant, and a second poly(phenylene ether) can provide certain advantageous properties. In particular, a combination of high heat resistance, high impact strength, and low flammability, particularly for thin molded articles, can be obtained. Therefore, a significant improvement is provided by the present disclosure, specifically as it relates to battery pack insulation films or sheets extruded from the composition.

This disclosure is further illustrated by the following examples, which are nonlimiting.

### EXAMPLES

Materials used in the following examples are described in Table 1.

**Table 1**

| Component | Description | Supplier |
|---|---|---|
| PPE-1 | Poly(2,6-dimethyl-1,4-phenylene ether) having an intrinsic viscosity of 0.46 dl/g | SABIC |
| PPE-2 | Poly(2,6-dimethyl-1,4-phenylene ether) having an intrinsic viscosity of 0.33 dl/g | SABIC |
| PPE-Si | A mixture of poly(2,6-dimethyl-1,4 -phonylene ether) (CAS Reg. No. 24938-67-8) and poly(2,6-dimethyl-1,4-phenylene ether-polydimethylsiloxane block copolymer (CAS Reg. No. 1202019-56-4), the mixture having a polysiloxane content of 5 weight percent and an intrinsic viscosity of 0.40 deciliter per gram as measured in chloroform at 25°C; prepared according to the procedure of U.S. Patent No. 8,017,697 to Carrillo et al., Example 16. | SABIC |
| BPADP | Bisphenol A bis-diphenyl phosphate, CAS Reg. No. 181028-79-5, obtained as CR741 | Zhejiang Wansheng Co., Ltd. |
| SEBS-1 | Polystyrene-poly(ethylene-butylene)-polystyrene triblock copolymer, having a polystyrene content of 30-33 weight percent and a negligible melt flow, measured at 260 °C and 5-kilogram load according to ASTM D1238; obtained as KRATON G1651 | Kraton Performance Polymers, Inc. |
| SEBS-2 | Polystyrene-poly(ethylene-butylene)-polystyrene triblock copolymer, having a polystyrene content of 30-33 weight percent and a melt flow 3 g/10min, measured at 260°C and 5-kilogram load according to ASTM D1238; obtained as KRATON G1652 | Kraton Performance Polymers, Inc. |
| HIPS | High Impact Polystyrene (also known as rubber-modified polystyrene or styrene-butadiene copolymer), CAS Reg. No. 9003-55-8, having a polybutadiene content of 30 weight percent | Demitsu Chemicals Southeast Asia Pte Ltd. |
| MgO | Magnesium oxide, CAS Reg. No. 1309-48--4, obtained as KYOWAMAG^{™} 150 | from Kyowa Chemical Industry Co., Ltd. |
| ZnS | Zinc sulfide, CAS Reg. No. 1314-98-3; obtained Sachtolith HD-S | Taizhou ATS Optical Materials Co., Ltd |
| TBPP | Tris(2,4-di-tert-butylphenyl) phosphite, CAS Reg. No. 31570-04-4; obtained as IRGAFOS^{™} 168 | BASF |
| CB | Carbon black pigment, CAS Reg. No. 1333-86-4, obtained as BLACKPEARLS^{™} 800 or MONARCH^{™} 800 | Cabot Corp. |
| TSAN | Poly(styrene-acrylonitrile)-encapsulated polytetrafluoroethylene, having a polytetrafluoroethylene content of about 50 weight percent. | SABIC |

Compositions were compounded using a on a Toshiba TEM-37BS twin screw extruder. All components were added at the feed throat of the extruded, exception for BPADP which was added through a liquid feeder. The extrudate was cooled in a water bath and pelletized. Pellets were conditioned at 120°C for 3 hours prior to injection molding or extrusion molding. The processing parameters used are summarized in Table 2.

**Table 2**

| Screw Design | L-2-1 |
|---|---|
| Feed (Zone 0) Temp. | - |
| Zone 1 Temp. | 50 °C |
| Zone 2 Temp. | 150 °C |
| Zone 3 Temp. | 240 °C |
| Zone 4 Temp. | 280 °C |
| Zone 5 Temp. | 280 °C |
| Zone 6 Temp. | 280 °C |
| Zone 7 Temp. | 300 °C |
| Zone 8 Temp. | 300 °C |
| Zone 9 Temp. | 300 °C |
| Zone 10 Temp. | 280 °C |
| Zone 11 Temp. | 280 °C |
| Zone 12 Temp. | - |
| Die Temp. | 290 °C |
| Screw Speed | 300 rpm |
| Throughput | 20 kg/hr |
| Torque | 45% |
| Side Feeder 1 speed | 250 rpm |

Test articles were injection molded on a Toshiba UH1000-110 injection molding machine operating at barrel temperatures of 290 °C, 300 °C, 300 °C, and 290 °C (from feed throat to nozzle), and a mold temperature of 90 °C.

Properties of the molded parts were tested according to the following standards.

Melt flow rate values, expressed in units of grams per 10 minutes, were determined according to ASTM D 1238-10, Procedure B, at a temperature of 300 °C and a 5 kilogram load. Heat deflection temperature (HDT), expressed in units of °C, was determined according to ASTM D648 at 1.82 MPa or 0.45 MPa using a bar having a thickness of 3.2 millimeters. Notched Izod impact (NII) strength values, expressed in units of joules/meter, were determined according to ASTM D 256-10 Method A at 23 °C using bar cross-sectional dimensions of 3.2 millimeters by 12.7 millimeters. Unnotched Izod impact, expressed in units of joules/meter, were determined according to ASTM D4812 at 23 °C using bar cross-sectional dimensions of 3.2 millimeters by 12.7 millimeters. Tensile properties were determined according to ASTM D638 at a sample thickness of 3.2 millimeters and a test speed of 5 millimeters per minute.

Hydrolytic stability was assessed by placing tensile bars into a hydrolytic chamber at 85°C and 85% relative humidity for a time of 1000 hours. The samples were then removed from the chamber for characterization. Hydrolytic stability was assessed by retention of tensile modulus and tensile stress. A tensile modulus and tensile stress retention of ≥90% was characterized as "good". If at least one of the tensile modulus or tensile stress retention was <90%, the hydrolytic stability was characterized as "poor".

Density, expressed in units of grams per cubic centimeters (g/cc), was determined according to ASTM D-792 or ISO 1183-1, Method A.

Water absorption, expressed as a percent change in weight, was determined according to ASTM D-570 or ISO 62, Method 4.

Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thicknesses of 1.0, 0.75, 0.5, 0.3, and 0.2 millimeters were conditioned at 23°C and 50% relative humidity for at least 48 hours or at 70°C and 50% relative humidity for 168 hours. In the UL 94 20 mm Vertical Burning Flame Test, a set of ten to twenty flame bars was tested. For each bar, a flame was applied for 10 seconds to the bar then removed, and the time required for the bar to self-extinguish (first after flame time, t1) was noted. The flame was then reapplied for 10 seconds and removed, and the time required for the bar to self-extinguish (second after flame time, t2) and the post-flame glowing time (afterglow time, t3) were noted. To achieve a rating of V-0, the after flame times t1 and t2 for each individual specimen must have been less than or equal to 10 seconds; and the total after flame time for all five specimens (t1 plus t2 for all five specimens) must have been less than or equal to 50 seconds; and the second after flame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the after flame times t1 and t2 for each individual specimen must have been less than or equal to 30 seconds; and the total after flame time for all five specimens (t1 plus t2 for all five specimens) must have been less than or equal to 250 seconds; and the second after flame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the after flame times t1 and t2 for each individual specimen must have been less than or equal to 30 seconds; and the total after flame time for all five specimens (t1 plus t2 for all five specimens) must have been less than or equal to 250 seconds; and the second after flame time plus the afterglow time for each individual specimen (t2 + t3) must have been less than or equal to 60 seconds; and no specimen can have flamed or glowed up to the holding clamp; but the cotton indicator can have been ignited by flaming particles or drops.

Compositions and properties are summarized in Table 3. The amount of each component is provided in weight percent based on the total weight of the composition.

**Table 3**

| Component | Units | CE1 | CE2 | CE3 | E1 | E2 | E3 | E4 | E5 | E6 | E7 | E8 |
|---|---|---|---|---|---|---|---|---|---|---|---|---|
| PPE-1 | wt% | 67 | 81.58 | 79.58 | 69.58 | 61.58 | 52.03 | 54.73 | 51.73 | 52.13 | 52.73 | |
| PPE-2 | wt% | | | | | | | | | | | 50.93 |
| PPE-Si | wt% | | | | 10 | 20 | 26.5 | 26.5 | 26.5 | 26.5 | 26.5 | 26.5 |
| BPADP | wt% | 11 | 11 | 13 | 13 | 11 | 11 | 11 | 12 | 12 | 12 | 13 |
| SEBS-1 | wt% | | 6.12 | 6.12 | 6.12 | 6.12 | 8.12 | | | | | |
| SEBS-2 | wt% | | | | | | | 6.12 | 8.12 | 8.12 | 7.12 | 8.12 |
| HIPS | wt% | 20.7 | | | | | | | | | | |
| MgO | wt% | 0.15 | 0.15 | 0.15 | 0.15 | 0.15 | 0.15 | 0.15 | 0.15 | 0.15 | 0.15 | 0.15 |
| ZnS | wt% | 0.15 | 0.15 | 0.15 | 0.15 | 0.15 | 0.15 | 0.15 | 0.15 | 0.15 | 0.15 | 0.15 |
| TBPP | wt% | 0.5 | 0.5 | 0.5 | 0.5 | 0.5 | 0.5 | 0.5 | 0.5 | 0.5 | 0.5 | 0.5 |
| CB | wt% | 0.5 | 0.5 | 0.5 | 0.5 | 0.5 | 0.5 | 0.5 | 0.5 | | 0.5 | 0.5 |
| TSAN | wt% | | | | | | 0.05 | 0.35 | 0.35 | 0.35 | 0.35 | 0.15 |
| Properties | | | | | | | | | | | | |
| MFR | g/10min | 21 | 11.5 | 19.5 | 22 | 15.1 | 21.1 | 32.2 | 40.7 | 49.6 | 37.1 | 57.0 |
| HDT@1.82 MPa | °C | 118 | 132 | 122 | 119 | 128 | 128 | 126 | 119 | 120 | 121 | 120 |
| HDT@0.45 MPa | °C | 133 | 149 | 137 | 136 | 145 | 144 | 144 | 137 | 137 | 139 | 137 |
| UL94 - 1.0 mm | | V0 | V0 | V0 | V0 | V0 | V0 | V0 | V0 | V0 | V0 | V0 |
| UL94 - 0.75 mm | | V0 | V1 | V0 | V0 | V0 | V0 | V0 | V0 | V0 | V0 | V0 |
| UL94 - 0.5 mm | | V2 | V1 | V1 | V0 | V0 | V0 | V0 | V0 | V0 | V0 | V0 |
| UL94 - 0.3 mm | | V2 | V2 | V1 | V0 | V0 | V0 | V0 | V0 | V0 | V0 | V0 |
| UL94 - 0.2 mm | | V2 | V2 | V1 | V0 | V0 | V0 | | | | | |
| NII | J/m | 140 | 296 | 235 | 307 | 326 | 441 | 105 | 412 | 394 | 224 | 183 |
| UNII | J/m | 1300 | 2190 | 2190 | 2190 | 2190 | 2190 | 1850 | 2170 | 2170 | 2180 | 1030 |
| Tens. Strain @ brk | % | 11.4 | 10.3 | 8.1 | 8.6 | 10.6 | 15.1 | 23 | 35 | 35 | 24.8 | 11.9 |
| Tens. Strain @ yield | % | 4.7 | 4.4 | 4.2 | 4.0 | 4.2 | 4 | 4.5 | 6.9 | 6.9 | 5.3 | 4.3 |
| Tens. Mod. | MPa | 2400 | 2394 | 2410 | 2373 | 2382 | 2303 | 2331 | 2183 | 2170 | 2272 | 2414 |
| Tens. Stress @ brk | MPa | 45.1 | 48.8 | 46.8 | 48 | 49 | 46 | 35 | 48 | 49 | 34 | 49 |
| Tens. Stress @ yield | MPa | 63.2 | 65.6 | 65.1 | 65 | 62 | 59 | 61 | 55 | 55 | 58 | 62 |
| Hydrolytic resistance, DH85 | | Good | Good | Good | Good | Good | Good | Good | Good | Good | Good | Good |

As shown in Table 3, the composition of comparative example 1 exhibited a flame resistance of V0 at 0.75 mm, and V2 at 0.5, 0.3 mm, and 0.2 mm. The composition of comparative example 2 exhibited an improved HDT relative to comparative example 1, but shows decreased flame performance, obtaining a flame rating of only V1 even at 0.75 mm. The composition of comparative example 3 exhibited improved flame resistance due to increased BPADP loading, however the HDT was reduced relative to that of comparative example 2. Thus, none of the comparative compositions can achieve a flame rating of V0 at thicknesses <0.75 mm, nor can they achieve a good balance between flame resistance and heat resistance (e.g., HDT).

In contrast, the compositions of examples 1-8 each exhibited a desirable combination of properties. Most notably, each of these compositions achieved a flame rating of V0 at 1.0-, 0.75-, 0.5- and 0.3-millimeter thicknesses. The compositions of examples 1-8, each containing PPE-Si, achieved a flame rating of V0 at a thickness of 0.3 millimeters, with the compositions of examples 1-3 further achieving a flame rating of V0 at a thickness of 0.2 millimeters. In contrast, the compositions of comparative examples 1-3 achieved flame ratings of V1 or V2 for thicknesses of 0.5 millimeters and below. In addition to the high flame resistance, the compositions of examples 1-8 also exhibited good hydrolytic resistance, heat resistance, and impact strength.

Accordingly, the composition of the present disclosure can provide a flame rating of V0 at thickness of ≤0.3 mm, and a desirable balance of thin wall flame rating and high heat resistance can be achieved.

The compositions of examples 1 and 2 were further compared to various existing compositions. The results are summarized in Table 4. The composition of comparative example 4 is NORYL^{™} PX9406P, a non-brominated, non-chlorinated, flame retardant polyphenylene ether resin, obtained from SABIC. The composition of comparative example 5 is FORMEX^{™} CND, a flame retardant polycarbonate, obtained from ITW FORMEX. The composition of comparative example 6 is FORMEX^{™} GK, a flame retardant polypropylene, obtained from ITW FORMEX.

For these examples, flammability was further assessed according to UL 94 VTM (vertical thin material flammability rating). Samples were pre-treated as described above. To achieve a rating of VTM-0, the after flame times t1 and t2 for each individual specimen must have been less than or equal to 10 seconds; and the total after flame time for all five specimens (t1 plus t2 for all five specimens) must have been less than or equal to 50 seconds; and the second after flame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. The thickness at which each composition achieves a rating of VTM-0 is provided in Table 4.

As shown in Table 4, existing compositions are not capable of achieving the combination of thin wall flame resistance, hydrolytic resistance and heat resistance. Thus, the compositions of the present disclosure provide a significant improvement. Table 4

| Property | Test method | E1 | E2 | CE4 | CE5 | CE6 |
|---|---|---|---|---|---|---|
| V0 | UL 94 | 0.2 mm | 0.2 mm | 0.75 mm | - | ≥0.43 |
| VTM-0 | UL 94 | 0.1 mm | 0.1 mm | - | 0.2 mm | 0.25 mm |
| FR package | - | Non-halogenated | Non-halogenated | Non-halogenated | Non-halogenated | Halogenated |
| HDT@0.45 MPa | ASTM D648 | 136 | 145 | 136 | 140 | 121 |
| Hydrolytic resistance | - | Good | Good | Good | Poor | Good |
| Density, g/cc | ASTM D792 | 1.10 | 1.10 | 1.10 | 1.21 | 0.972 |
| Water Absorption (% change in weight) | ASTMD570 | 0.07% | 0.07% | 0.07% | 0.2% | 0.06% |

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. Any aspect described herein can be combined with any other aspect. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

## Claims

1. A thermoplastic composition comprising:
5 to 40 weight percent of a poly(phenylene ether)-poly(siloxane) block copolymer reaction product comprising a poly(phenylene ether)-poly(siloxane) block copolymer and a first poly(phenylene ether);
1 to 15 weight percent of an impact modifier comprising a hydrogenated block copolymer of an alkenyl aromatic and a conjugated diene;
5 to 20 weight percent of an organophosphate ester flame retardant;
less than 1 weight percent of a reinforcing filler;
less than 0.5 weight percent of tricalcium phosphate; and
40 to 90 weight percent of a second poly(phenylene ether);
wherein weight percent of each component is based on the total weight of the composition; and
wherein the poly(phenylene ether)-poly(siloxane) block copolymer reaction product and the second poly(phenylene ether) are present in a total amount of at least 70 weight percent.

2. The composition of claim 1, wherein the second poly(phenylene ether) is present in an amount of 45 to 85 weight percent, based on the total weight of the composition.

3. The composition of claim 1 or 2, wherein the poly(phenylene ether)-poly(siloxane) block copolymer reaction product and the second poly(phenylene ether) are present in a total amount of 70 to 94 weight percent, or 75 to 85 weight percent, based on the total weight of the composition.

4. The composition of any of claims 1 to 3, wherein a molded sample of the composition exhibits:
a UL-94 flammability rating of V0, measured using 1.0-millimeter test bars after conditioning at 23°C for 48 hours and at 70°C for 168 hours;
a UL-94 flammability rating of V0, measured using 0.75-millimeter test bars after conditioning at 23°C for 48 hours and at 70°C for 168 hours;
a UL-94 flammability rating of V0, measured using 0.5-millimeter test bars after conditioning at 23°C for 48 hours and at 70°C for 168 hours;
a UL-94 flammability rating of V0, measured using 0.3-millimeter test bars after conditioning at 23°C for 48 hours and at 70°C for 168 hours;
a UL-94 flammability rating of V0, measured using 0.2-millimeter test bars after conditioning at 23°C for 48 hours and at 70°C for 168 hours; and
optionally, one or both of
a heat deflection temperature of greater than or equal to 115°C, measured on 3.2 mm thick bars using a load of 1.82 MPa according ASTM D648; and
a notched Izod impact strength of greater than or equal to 240 J/m, measured according to ASTM D256.

5. The composition of any of claims 1 to 4, wherein the first poly(phenylene ether) has an intrinsic viscosity of greater than 0.25 deciliters per gram, or 0.4 to 0.6 deciliters per gram, measured at 25°C in chloroform using an Ubbelohde viscometer;
preferably wherein the poly(phenylene ether) comprises poly(2,6-dimethyl-1,4-phenylene ether).

6. The composition of any of claims 1 to 5, wherein the organophosphate ester flame retardant comprises resorcinol bis-diphenyl phosphate, bis-phenol A bis-diphenyl phosphate, resorcinol bis(di 2,6-dimethylphenyl) phosphate, oligomeric phosphate ester, triphenyl phosphate, or a combination thereof, preferably bis-phenol A bis-diphenyl phosphate.

7. The composition of any of claims 1 to 6, wherein the hydrogenated block copolymer comprises polystyrene-poly(ethylene-butylene)-polystyrene.

8. The composition of any of claims 1 to 7, wherein the composition comprises 0 to 15 weight percent of a homopolystyrene or a high impact polystyrene.

9. The composition of any of claims 1 to 8, wherein the composition excludes glass fibers.

10. The composition of any of claims 1 to 9, further comprising 0.1 to 10 weight percent of an additive composition.

11. The composition of claim 1, comprising
8 to 28 weight percent of the poly(phenylene ether)-polysiloxane block copolymer reaction product;
50 to 75 weight percent of the second poly(phenylene ether);
3 to 10 weight percent of the hydrogenated block copolymer; and
7 to 15 weight percent of the organophosphate ester flame retardant.

12. The composition of claim 11, wherein the poly(phenylene ether)-polysiloxane block copolymer reaction product and the second poly(phenylene ether) are present in a total amount of at least 75 weight percent, based on the total weight of the composition.

13. A method of making the composition of any one or more of claims 1 to 12; the method comprising melt-mixing the components of the composition.

14. An article comprising the composition of any of claims 1 to 12,
preferably wherein the article is an electric vehicle battery module, battery insulation sheet or film, battery housing, battery case, battery cell frame, battery cell spacers, battery cell retainers, bus bar holders, terminal covers, an electrical or electronic component, charger adaptor insulation sheet or film, a thermoset circuit breaker, a fuser holder for an electrographic copier, a photovoltaic junction box, photovoltaic connector, an electrical connector, an automotive electrical connector, an electrical relay, a charge coupler, an appliance component, an automotive component, a portable device, a mobile component, or a stationary electrical component.

15. An electric vehicle battery component extruded from the composition of any of claims 1 to 12, preferably wherein the electric vehicle battery component is an electric vehicle battery insulation sheet or film.

## Patentansprüche

1. Eine thermoplastische Zusammensetzung, umfassend:
5 bis 40 Gewichtsprozent eines Poly(phenylenether)-Poly(siloxan)-Blockcopolymer- Reaktionsprodukts, das ein Poly(phenylenether)-Poly(siloxan)-Blockcopolymer und ein erstes Poly(phenylenether) umfasst;
1 bis 15 Gewichtsprozent eines Schlagzähmodifikators, der ein hydriertes Blockcopolymer aus einem alkenylaromatischen Polymer und einem konjugierten Dien umfasst;
5 bis 20 Gewichtsprozent eines Organophosphatester-Flammschutzmittels;
weniger als 1 Gewichtsprozent eines verstärkenden Füllstoffs;
weniger als 0,5 Gewichtsprozent Tricalciumphosphat;
und 40 bis 90 Gewichtsprozent eines zweiten Poly(phenylenethers); wobei die Gewichtsprozente jeder Komponente auf das Gesamtgewicht der Zusammensetzung bezogen sind; und
wobei das Reaktionsprodukt des Poly(phenylenether)-Poly(siloxan)-Blockcopolymers und der zweite Poly(phenylenether) in einer Gesamtmenge von mindestens 70 Gewichtsprozent vorliegen.

2. Zusammensetzung nach Anspruch 1, wobei der zweite Poly(phenylenether) in einer Menge von 45 bis 85 Gewichtsprozent, bezogen auf das Gesamtgewicht der Zusammensetzung, vorliegt.

3. Zusammensetzung nach Anspruch 1 oder 2, wobei das Reaktionsprodukt des Poly(phenylenether)-Poly(siloxan)-Blockcopolymers und der zweite Poly(phenylenether) in einer Gesamtmenge von 70 bis 94 Gewichtsprozent oder 75 bis 85 Gewichtsprozent, bezogen auf das Gesamtgewicht der Zusammensetzung, vorliegen.

4. Zusammensetzung nach einem der Ansprüche 1 bis 3, wobei ein Formkörper der Zusammensetzung Folgendes aufweist:
eine Entflammbarkeitsklasse nach UL-94 von V0, gemessen an 1,0-Millimeter-Prüfstäben nach einer Konditionierung bei 23 °C für 48 Stunden und bei 70 °C für 168 Stunden;
eine Entflammbarkeitsklasse nach UL-94 von V0, gemessen an 0,75-Millimeter-Prüfstäben nach einer Konditionierung bei 23 °C für 48 Stunden und bei 70 °C für 168 Stunden;
eine Entflammbarkeitsklasse V0 nach UL-94, gemessen an 0,5-Millimeter-Prüfstäben nach einer Konditionierung bei 23 °C für 48 Stunden und bei 70 °C für 168 Stunden; eine Entflammbarkeitsklasse V0 nach UL-94, gemessen an 0,3-Millimeter- Prüfstäben nach einer Konditionierung bei 23 °C für 48 Stunden und bei 70 °C für 168 Stunden; eine Entflammbarkeitsklasse nach UL-94 von V0, gemessen an 0,2- Millimeter-Prüfstäben nach einer Konditionierung bei 23 °C für 48 Stunden und bei 70 °C für 168 Stunden; und optional eines oder beides:
eine Wärmeformbeständigkeit von mindestens 115 °C, gemessen an 3,2 mm dicken Stäben unter einer Belastung von 1,82 MPa gemäß ASTM D648; und
eine Izod-Kerbschlagzähigkeit von mindestens 240 J/m, gemessen gemäß ASTM D256.

5. Zusammensetzung nach einem der Ansprüche 1 bis 4, wobei der erste Poly(phenylenether) eine intrinsische Viskosität von mehr als 0,25 Deziliter pro Gramm oder von 0,4 bis 0,6 Deziliter pro Gramm aufweist, gemessen bei 25 °C in Chloroform unter Verwendung eines Ubbelohde-Viskosimeters; wobei vorzugsweise der Poly(phenylenether) Poly(2,6-dimethyl-1,4- phenylenether) umfasst.

6. Zusammensetzung nach einem der Ansprüche 1 bis 5, wobei das organische Phosphatester-Flammschutzmittel Resorcin-Bis-diphenylphosphat, Bisphenol-A-Bis-diphenylphosphat, Resorcin-Bis- (di-2,6-dimethylphenyl)phosphat, einen oligomeren Phosphatester, Triphenylphosphat oder eine Kombination davon, vorzugsweise Bisphenol-A-Bis-diphenyl-phosphat, umfasst.

7. Zusammensetzung nach einem der Ansprüche 1 bis 6, wobei das hydrierte Blockcopolymer Polystyrol-Poly(ethylen-butylen)-Polystyrol umfasst.

8. Zusammensetzung nach einem der Ansprüche 1 bis 7, wobei die Zusammensetzung 0 bis 15 Gewichtsprozent eines Homopolystyrols oder eines schlagzähen Polystyrols umfasst.

9. Zusammensetzung nach einem der Ansprüche 1 bis 8, wobei die Zusammensetzung keine Glasfasern enthält.

10. Zusammensetzung nach einem der Ansprüche 1 bis 9, die ferner 0,1 bis 10 Gewichtsprozent einer Additivzusammensetzung umfasst.

11. Zusammensetzung nach Anspruch 1, umfassend
8 bis 28 Gewichtsprozent des Poly(phenylenether)-Polysiloxan-Blockcopolymers des Reaktionsprodukts;
50 bis 75 Gewichtsprozent des zweiten Poly(phenylenethers);
3 bis 10 Gewichtsprozent des hydrierten Blockcopolymers; und
7 bis 15 Gewichtsprozent des Organophosphatester-Flammschutzmittels.

12. Zusammensetzung nach Anspruch 11, wobei das Reaktionsprodukt des Poly(phenylenether)-Polysiloxan-Blockcopolymers und der zweite Poly(phenylenether) in einer Gesamtmenge von mindestens 75 Gewichtsprozent, bezogen auf das Gesamtgewicht der Zusammensetzung, vorliegen.

13. Verfahren zur Herstellung der Zusammensetzung nach einem oder mehreren der Ansprüche 1 bis 12, wobei das Verfahren das Schmelzmischen der Komponenten der Zusammensetzung umfasst.

14. Gegenstand, der die Zusammensetzung nach einem der Ansprüche 1 bis 12 umfasst, wobei der Gegenstand vorzugsweise ein Batteriemodul für Elektrofahrzeuge, eine Batterieisolierfolie oder -folie, ein Batteriegehäuse, ein Batteriekasten, ein Batteriezellrahmen, Batteriezellabstandshalter, Batteriezellhalterungen, Sammelschienenhalter, Anschlusskappen, eine elektrische oder elektronische Komponente, eine Isolierfolie oder -folie für Ladegerätadapter, einen duroplastischen Leistungsschalter, einen Fixierhalter für ein elektrografisches Kopiergerät, eine Photovoltaik-Anschlussdose, einen Photovoltaik- Steckverbinder, einen elektrischen Steckverbinder, einen Kfz-Steckverbinder, ein elektrisches Relais, einen Ladekoppler, eine Haushaltsgerätekomponente, eine Kfz-Komponente, ein tragbares Gerät, eine mobile Komponente oder eine stationäre elektrische Komponente ist.

15. Eine aus der Zusammensetzung gemäß einem der Ansprüche 1 bis 12 extrudierte Komponente für eine Elektrofahrzeugbatterie, wobei die Komponente für eine Elektrofahrzeugbatterie vorzugsweise eine Isolierfolie oder -schicht für eine Elektrofahrzeugbatterie ist.

## Revendications

1. Composition thermoplastique comprenant :
5 à 40 pour cent en poids d'un produit de réaction de copolymère à blocs poly(phénylène éther)-polysiloxane comprenant un copolymère à blocs poly(phénylène éther)-polysiloxane et un premier poly(phénylène éther) ;
1 à 15 pour cent en poids d'un modificateur de la résistance au choc comprenant un copolymère à blocs hydrogéné d'un composé aromatique alcénylique et d'un diène conjugué ;
5 à 20 pour cent en poids d'un retardateur de flamme à base d'ester organophosphaté ;
moins de 1 pour cent en poids d'une charge de renforcement ;
moins de 0,5 pour cent en poids de phosphate tricalcique ; et
40 à 90 pour cent en poids d'un second poly(phénylène éther) ;
le pourcentage en poids de chaque composant étant basé sur le poids total de la composition ; et
le produit de réaction de copolymère à blocs poly(phénylène éther)-polysiloxane et le second poly(phénylène éther) étant présents en une quantité totale d'au moins 70 pour cent en poids.

2. Composition selon la revendication 1, dans laquelle le second poly(phénylène éther) est présent en une quantité de 45 à 85 pour cent en poids, sur la base du poids total de la composition.

3. Composition selon la revendication 1 ou 2, dans laquelle le produit de réaction de copolymère à blocs poly(phénylène éther)-polysiloxane et le second poly(phénylène éther) sont présents en une quantité totale de 70 à 94 pour cent en poids, ou de 75 à 85 pour cent en poids, sur la base du poids total de la composition.

4. Composition selon l'une quelconque des revendications 1 à 3, dans laquelle un échantillon moulé de la composition présente :
un classement d'inflammabilité UL-94 de V0, mesuré en utilisant des barres d'essai de 1,0 millimètre après conditionnement à 23 °C pendant 48 heures et à 70 °C pendant 168 heures ;
un classement d'inflammabilité UL-94 de V0, mesuré en utilisant des barres d'essai de 0,75 millimètre après conditionnement à 23 °C pendant 48 heures et à 70 °C pendant 168 heures ;
un classement d'inflammabilité UL-94 de V0, mesuré en utilisant des barres d'essai de 0,5 millimètre après conditionnement à 23 °C pendant 48 heures et à 70 °C pendant 168 heures ;
un classement d'inflammabilité UL-94 de V0, mesuré en utilisant des barres d'essai de 0,3 millimètre après conditionnement à 23 °C pendant 48 heures et à 70 °C pendant 168 heures ;
un classement d'inflammabilité UL-94 de V0, mesuré en utilisant des barres d'essai de 0,2 millimètre après conditionnement à 23 °C pendant 48 heures et à 70 °C pendant 168 heures ; et,
de façon facultative, l'une ou les deux parmi
une température de fléchissement à chaud supérieure ou égale à 115 °C, mesurée sur des barres de 3,2 mm d'épaisseur en utilisant une charge de 1,82 MPa selon la norme ASTM D648 ; et
une résistance au choc Izod sur éprouvette entaillée supérieure ou égale à 240 J/m, mesurée selon la norme ASTM D256.

5. Composition selon l'une quelconque des revendications 1 à 4, dans laquelle le premier poly(phénylène éther) présente une viscosité intrinsèque supérieure à 0,25 décilitre par gramme, ou de 0,4 à 0,6 décilitre par gramme, mesurée à 25 °C dans du chloroforme en utilisant un viscosimètre Ubbelohde ;
le poly(phénylène éther) comprenant de préférence du poly(2,6-diméthyl-1,4-éther de phénylène).

6. Composition selon l'une quelconque des revendications 1 à 5, dans laquelle le retardateur de flamme à base d'ester organophosphaté comprend du bis(diphényl phosphate) de résorcinol, du bis(diphényl phosphate) de bisphénol A, du bis(di-2,6-diméthylphényl)phosphate de résorcinol, un ester de phosphate oligomère, du phosphate de triphényle, ou une combinaison de ceux-ci, de préférence du bis(diphényl phosphate) de bisphénol A.

7. Composition selon l'une quelconque des revendications 1 à 6, dans laquelle le copolymère à blocs hydrogéné comprend du polystyrène-poly(éthylène-butylène)-polystyrène.

8. Composition selon l'une quelconque des revendications 1 à 7, dans laquelle la composition comprend 0 à 15 pour cent en poids d'un homopolystyrène ou d'un polystyrène choc.

9. Composition selon l'une quelconque des revendications 1 à 8, dans laquelle la composition exclut les fibres de verre.

10. Composition selon l'une quelconque des revendications 1 à 9, comprenant en outre 0,1 à 10 pour cent en poids d'une composition d'additifs.

11. Composition selon la revendication 1, comprenant
8 à 28 pour cent en poids du produit de réaction de copolymère à blocs poly(phénylène éther)-polysiloxane ;
50 à 75 pour cent en poids du second poly(phénylène éther) ;
3 à 10 pour cent en poids du copolymère à blocs hydrogéné ; et
7 à 15 pour cent en poids du retardateur de flamme à base d'ester organophosphaté.

12. Composition selon la revendication 11, dans laquelle le produit de réaction de copolymère à blocs poly(phénylène éther)-polysiloxane et le second poly(phénylène éther) sont présents en une quantité totale d'au moins 75 pour cent en poids, sur la base du poids total de la composition.

13. Procédé de fabrication de la composition selon l'une quelconque ou plusieurs des revendications 1 à 12 ; le procédé comprenant le mélange à l'état fondu des composants de la composition.

14. Article comprenant la composition selon l'une quelconque des revendications 1 à 12,
dans lequel de préférence l'article est un module de batterie de véhicule électrique, une feuille ou un film d'isolation de batterie, un logement de batterie, un boîtier de batterie, un cadre de cellule de batterie, des espaceurs de cellules de batterie, des éléments de retenue de cellules de batterie, des supports de barres omnibus, des couvercles de bornes, un composant électrique ou électronique, une feuille ou un film d'isolation d'adaptateur de chargeur, un disjoncteur thermodurcissable, un support d'unité de fusion pour un copieur électrographique, une boîte de jonction photovoltaïque, un connecteur photovoltaïque, un connecteur électrique, un connecteur électrique automobile, un relais électrique, un coupleur de charge, un composant d'appareil, un composant automobile, un dispositif portable, un composant mobile, ou un composant électrique stationnaire.

15. Composant de batterie de véhicule électrique extrudé à partir de la composition selon l'une quelconque des revendications 1 à 12, de préférence dans lequel le composant de batterie de véhicule électrique est une feuille ou un film d'isolation de batterie de véhicule électrique.
